(19) Europäisches Patentamt
European Patent Office
Office européen des brevets

(11) EP 4 597 260 A1

(12) EUROPEAN PATENT APPLICATION

(43) Date of publication:
06.08.2025 Bulletin 2025/32

(21) Application number: 25154004.3

(22) Date of filing: 27.01.2025

(51) International Patent Classification (IPC):
G06F 1/329 (2019.01)   H02J 7/34 (2006.01)
H02J 7/35 (2006.01)

(52) Cooperative Patent Classification (CPC):
G06F 1/329; G06F 1/263; G06F 1/28; G06F 1/3215;
G06F 1/3228; G06F 1/3243; H02J 7/345; H02J 7/35

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.02.2024 CN 202410148269

(71) Applicant: Robert Bosch GmbH
70442 Stuttgart (DE)

(72) Inventors:
• YANG, Fan
Shanghai, 200335 (CN)
• YANG, Wanlin
Shanghai, 200335 (CN)
• NIU, Dixiao
Shanghai, 200335 (CN)

(54) METHODS, DEVICES, EQUIPMENT, AND MEDIA FOR PROCESSING TASKS

(57) The examples of the present disclosure relate to methods, devices, equipment, and media for processing tasks. The method includes measuring a voltage of a capacitor used to provide power for the execution of a task in response to a timer expiration for execution of the task. The method further comprises updating the timer with a target length in response to the voltage being within a predetermined range, wherein the target length is determined based on the compensation voltage provided to the capacitor by the energy conversion component, and performing the task with the voltage of the capacitor. The method of the present disclosure allows for the voltage to be provided to the capacitor by an energy conversion component, enables self-supply and avoids additional wire arrangement, and allows for the determination of the execution period of the task dispatch according to the voltage of the capacitor, enabling reliable execution of the task and improving the user experience.

FIG. 1

EP 4 597 260 A1

**Description**

Technical Field

Embodiments of the present disclosure relate generally to the field of task management, and in particular to methods, devices, equipment, and media for processing tasks.

Background Art

As industrialization has increased, large-scale industrial Internet of Things (IoT) applications have been deployed. In these applications, various tasks may be utilized to implement manufacturing scenes. For example, an anomaly detection task can be achieved, which is considered an important task in the manufacturing scene. A quality defect can be prevented and production delays avoided if a potential failure is identified prior to the occurrence of the potential failure, enabling the manufacturer to initiate early intervention.

In addition, various algorithms or models, including machine learning models, are increasingly being applied to the industrial IoT in the development of the industrial IoT. The combination of the various models and the IoT allows for the use of algorithms or models, such as machine learning models, to address issues in the various IoT. For example, identification of potential faults described above. However, there are many issues that need to be addressed in the development of the Industrial IoT.

Summary of Invention

Examples of the present disclosure provide methods, devices, equipment, and media for processing tasks.

A first aspect of the present disclosure provides a method for processing tasks. The method includes measuring a voltage of a capacitor used to provide power for the execution of a task in response to a timer expiration for execution of the task. The method further comprises updating the timer with a target length in response to the voltage being within a predetermined range, wherein the target length is determined based on the compensation voltage provided to the capacitor by the energy conversion component, and performing the task with the voltage of the capacitor.

A second aspect of the present disclosure provides a device for processing tasks. The device includes a voltage measurement unit configured to measure a voltage of a capacitor used to provide power for the execution of a task in response to a timer expiration for execution of the task, a timer update and a task execution unit configured to update the timer with a target length of time in response to the voltage being within a predetermined range, where the target length is determined based on a compensation voltage provided to the capacitor by the energy conversion component, and a voltage with the capacitor is used for task execution.

According to a third aspect of the present disclosure, a controller is provided. The controller comprises at least one processor, and a memory coupled to the at least one processor and having instructions stored thereon that, when executed by the at least one processor, cause the controller to perform the method of the first aspect of the present disclosure.

According to a fourth aspect of the present disclosure, an energy-based adaptive dispatching device is provided. The task processing device includes an energy conversion component, a capacitor, and a controller in a third aspect of the present disclosure.

According to a fifth aspect of the present disclosure, a computer-readable storage medium is provided. The computer-readable storage medium has computer-executable instructions stored thereon, wherein the computer-executable instructions are executed by a processor to perform the steps of the method according to the first aspect of the present disclosure.

Description of Accompanying Drawings

The exemplary examples of the present disclosure will be described in further detail in conjunction with accompanying drawings in order to further clarify the above-mentioned and other objectives, features and advantages of the present disclosure, wherein in the exemplary examples of the present disclosure, the same reference number typically represents the same parts.

Fig. 1 illustrates a schematic diagram of an exemplary environment in which a device and/or a method according to an example of the present disclosure may be implemented;

FIG. 2 illustrates a schematic diagram of an embodiment of an energy-based adaptive scheduling device system structure, consistent with examples of the present disclosure;

FIG. 3 illustrates a schematic diagram of an embodiment of a circuit of a solar panel, consistent with examples of the present disclosure;

FIG. 4 illustrates a schematic diagram of an embodiment of a voltage measurement circuit, consistent with examples of the present disclosure;

FIG. 5 illustrates a schematic diagram of an embodiment of a specific design of a system structure, consistent with examples of the present disclosure;

FIG. 6 illustrates a flow chart of a method for processing a task, consistent with examples of the present disclosure;

FIG. 7 illustrates a schematic diagram of an embodiment process for processing a task, consistent with examples of the present disclosure;

FIG. 8 illustrates a schematic diagram of another embodiment process for processing a task, consistent with examples of the present disclosure;

FIG. 9 illustrates a schematic diagram of an embodiment of on-demand scheduling and periodic scheduling, consistent with examples of the present disclosure;

FIG. 10 illustrates a schematic diagram of a device for processing a task, consistent with examples of the present disclosure;

Fig. 11 illustrates a schematic block diagram of an exemplary device according to an example that is suitable to embody the content of the present disclosure.

In the various accompanying drawings, the same or corresponding numbers represent the same or corresponding portions.

Specific Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to". The term "based on" should be understood as "at least partially based on". The term "one example" or "this example" should be understood as "at least one example". The terms "first", "second", etc. may refer to and represent different or the same object. The text below may comprise other specific and implicit meanings.

As previously noted, there are many issues that need to be addressed in the development of the industrial IoT. For example, early identification of potential faults can be challenging. For existing production lines, in order to perform tasks such as fault detection, a new detection device or detection component needs to be added to complete the above tasks. For these additional detection devices or detection parts, power supply is required when working. However, it is very challenging to add additional power or to leverage additional devices to form the industrial IoT, making it difficult to use wire-connected computing devices for fault monitoring. Battery-powered equipment requires frequent battery replacements, which can also seriously affect the monitoring efficiency of automated production lines.

In addition, the use of energy harvesting technologies (e.g., solar panels) enables self-powered in industrial environments. However, existing energy collection platforms are typically designed for intermittent computing. In industrial applications that emphasize reliability, ongoing data collection and decision-making are critical. When there is a shortage of energy source, the execution of tasks designed for sustainable operation cannot be supported.

To address at least the above and other potential problems, the examples of the present disclosure provide a method for processing tasks. In the method, the controller may measure the voltage of the capacitor used to provide power for the execution of the task when a timer expiration for execution of the task. The controller then judges if the voltage of the capacitor is within a predetermined range, and if the voltage of the capacitor is within the predetermined range, the timer may be updated using a target length, where the target length is determined based on the compensation voltage provided to the capacitor by the energy conversion component. At the same time, the controller may also perform the task using the voltage provided by the capacitor. By this method, the voltage to the capacitor may be provided by the energy conversion component, which avoids the addition of additional power cable arrangement in the detection environment, and the periodicity of task scheduling execution is determined according to the voltage of the capacitor, so that the reliable execution of the task is achieved by self-power, improving the user experience.

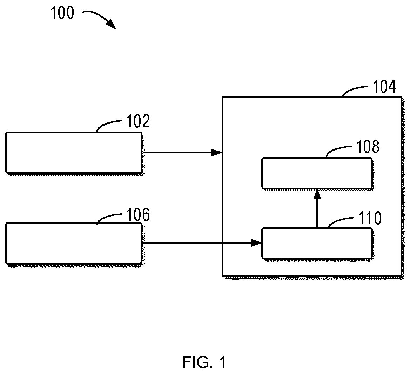

Examples of the present disclosure will be described in further detail below in conjunction with the accompanying drawings, wherein FIG. 1 illustrates an exemplary environment in which the device and/or method according to the examples of the present disclosure may be implemented.

As shown in FIG. 1, the example environment 100 includes a controller 104. The controller 104 is used to control the execution of the task 102. For example, the controller 104 schedules execution of the task 102 according to the timer 108.

In some examples, the controller 104 may be a microcontroller on-chip system. In some examples, the controller 104 is any suitable computing device that may be powered by a capacitor. Alternatively, or in addition, the controller 104 may also employ a battery or power supply in the event that the capacitor is not sufficiently powered.

As shown in FIG. 1, the task 102 is loaded externally to the controller 104 and then executed by the controller 104, which is merely an example and not a specific limitation of the disclosure. In some examples, task 102 is stored locally at controller 104.

In some examples, task 102 is a reasoning and/or training task for a machine learning model. In one example, the machine learning model is a neural network model. In another example, the machine learning model is a decision tree. In yet another example, the machine learning model is a linear regression model. The above examples are intended only to describe the present disclosure and are not a specific limitation of the present disclosure. In some examples, task 102 is an algorithm or model other than a machine learning model. For example, task 102 is a sort algorithm for performing sort operations on some data. The above examples are intended only to describe the present disclosure and are not a specific limitation of the present disclosure.

The controller 104 is connected to the capacitor 106. The capacitor 106 provides energy to the controller. For example, the capacitor 106 may provide a voltage to the controller 104 for the controller to perform the task 102. The capacitor 106 can obtain energy from the energy conversion component. In some examples, the energy conversion component is a solar panel. The capacitor 106 is coupled to the solar panel and provides voltage to the capacitor 106 through the solar panel. In some examples, the energy conversion component is a wind or water energy conversion device. The capacitor 106 may be coupled to a wind or hydropower plant to provide voltage to the capacitor 106. Additionally, in addition to the capacitor 106 providing voltage to the controller 104, the battery may also provide voltage to the controller 104.

The controller 104 also includes a timer 108. The controller 104 may control the execution of the task 106 via the timer 108. The controller 104 is used to perform the task 106 when the timer 108 expires. At this point, the controller 104 also needs to determine whether to power the microcontroller to perform the task with the capacitor. In this process, the controller 104 detects the voltage 110 of the capacitor 106 and determines if the voltage 110 of the capacitor 106 is within a predetermined range. The maximum voltage of a capacitor, for example, is 5.5V, which is predetermined to range of 3-5.5V. If the voltage 110 of the capacitor 106 at this time is within this predetermined range, the voltage 110 of the capacitor 106 may be used to perform the task 102. The task 102 is performed using the voltage provided by the capacitor. If the voltage 110 of the capacitor 106 is not within a predetermined range, such as below 3V, the voltage of the capacitor is insufficient to support the execution of the task 102. At this point, a battery or power supply may be utilized to provide voltage to the controller 104 to perform the task 102. Further, in addition to performing the task 102, the controller 104 updates the timer 108 to determine when the task will be performed next.

By this method, the voltage to the capacitor may be provided by the energy conversion component, which avoids the addition of additional power cable arrangement in the detection environment, and the periodicity of task scheduling execution is determined according to the voltage of the capacitor, so that the reliable execution of the task is achieved by self-power, improving the user experience.

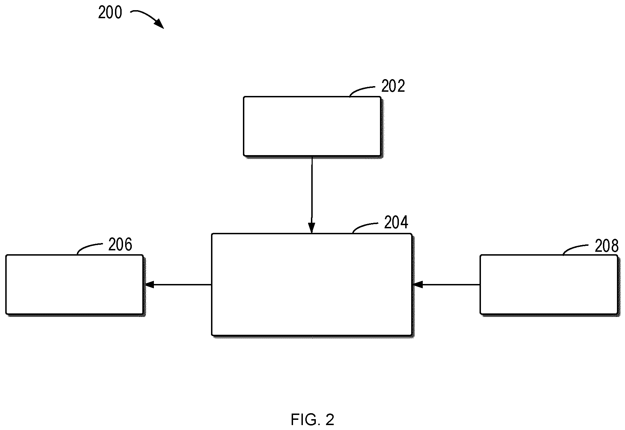

An exemplary environment in which an device and/or a method according to an example of the present disclosure may be implemented is described above in conjunction with Fig. 1. A schematic diagram of one embodiment of a system structure, consistent with examples of the present disclosure, is described below in connection with FIG. 2.

FIG. 2 shows an example 200 of an energy-based adaptive dispatching device implementing the structure of FIG. 1. The system structure of the energy-based adaptive dispatch device includes a light sensor 202 for measuring the illumination of light. In an example, the light sensor 202 is a light sensor. In another example, the light sensor 202 is an illumination sensor. The above examples are intended only to describe the present disclosure and are not a specific limitation of the present disclosure.

The light sensor 202 communicates the detected illumination to the microcontroller unit 204, which corresponds to the controller 104 of the FIG. 1. Based on the illumination obtained from the light sensor 202, the microcontroller unit 204 may determine the voltage obtained by the solar panel for the capacitor. Further, the microcontroller unit 204 may also obtain data measured by the measurement unit 208, such as a measured vibration or sound signal of the machine. The data measured by the measurement unit 208 is used to perform tasks within the microcontroller, such as predicting a failure of the machine, such as data measured by the measurement unit 208. In addition, the microcontroller unit 204 is also coupled to the memory card 206 and is used to store the results calculated by the microcontroller unit in the memory card 206. Additionally, the microcontroller unit may also store the data it receives, such as the light sensor 202 and the measurement unit 208, onto the memory card 206.

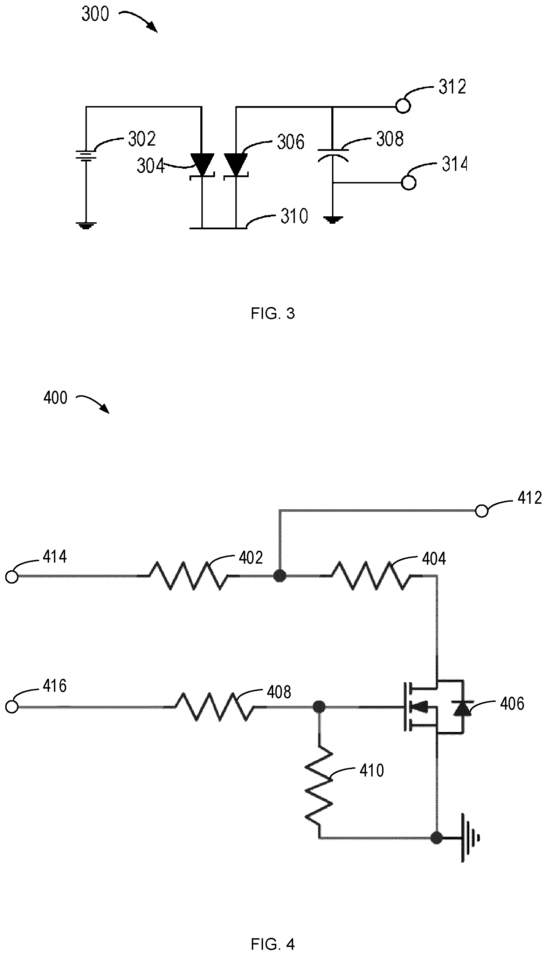

A schematic diagram of one embodiment of a system structure of an example of the present disclosure is described above in connection with FIG. 2. A schematic diagram of an embodiment of a circuit of a solar panel, consistent with examples of the present disclosure, is described below in connection with FIG. 3.

As shown in Figure 3, in the circuit example 300 of the solar panel that powers the capacitor 308 in Figure 1, the contacts 312 and 314 are respectively connected to the input and output ends of the solar panel to allow charging of the capacitor 308. For example, the solar panel is charged with 0.1F capacitor. As the solar panel receives more energy, the voltage of the capacitor 308 increases as the energy received by the solar panel increases. The capacitor 308 is connected to the power supply voltage 310 of the circuit via diode 306. In addition, battery 302 is also present in example 300, which is also connected to power supply voltage 310 of the circuit via diode 304. The battery 302 may provide a voltage to the circuit when the voltage of the capacitor 308 is below a threshold voltage.

A schematic diagram of an example of a circuit of a solar panel, in connection with FIG. 3, is described above. A schematic diagram of an embodiment of a voltage measurement circuit, consistent with examples of the present disclosure, is described below in connection with FIG. 4.

As the charging process progresses, the energy generated by the solar panel to charge the capacitor generally follows a mode of increasing and then decreasing, requiring maximum power point tracking (MPPT). Thus, the example 400 of the circuit shown in FIG. 4 acts as a voltage harvesting device to capture the real-time voltage of the solar panel to estimate its power output. Thus, the example 400 shown in Figure 4 can be used to measure the voltage in the capacitor 308 in Figure 3. In FIG. 4, the junction 414 is connected to an input interface 414 that is connectable to the solar panel and the junction 412 is connected to a microcontrol unit for obtaining a voltage value for the resistance 404, which may determine the voltage provided by the solar panel based on the resistance size of resistance 402 and resistance 404 to determine the voltage of the capacitor. As shown in FIG. 4, the voltage measurement circuit also has a junction 416 for providing a test signal managed by the controller and can regulate the start and stop of voltage collection by an on/off operation of the MOS tube. Further, the voltage measurement circuit includes resistance 408 and 410 and an audion 406 where the audion 406 is used to ensure that voltage can be detected at the junction 412.

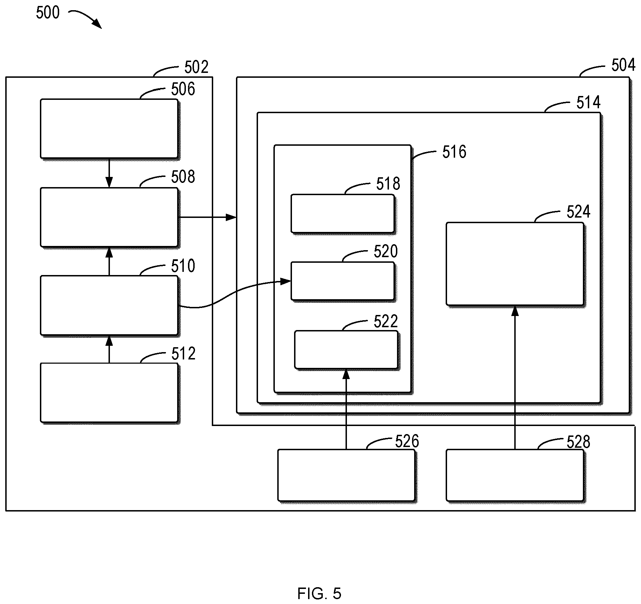

A schematic diagram of an embodiment of a voltage measurement circuit, consistent with examples of the present disclosure, is described above in connection with FIG. 4. An embodiment of a specific design of a system structure consistent with examples of the present disclosure is described below in connection with FIG. 5.

As shown in FIG. 5, one specifically designed example 500 of the system structure includes an external hardware 502 and a microcontroller on-chip system 504. The external hardware 502 includes a solar panel 512 for acquiring light in an environment. The solar panel 512 may provide energy to the capacitor 510 so that the capacitor can continuously obtain energy through the solar panel 512. In addition, the external hardware 5502 also includes a battery 506. Both battery 506 and capacitor 510 can be used to provide energy, such as voltage, to the microcontroller on-chip system 504. The battery 506 and the capacitor 510 are connected to a dual-power selector 508 that is used to select which of the batteries 506 and the capacitor 510 provides voltage to the microcontroller on-chip system 504. In addition, the external hardware 502 also has a light sensor 526 for measuring the illumination 522 of light for a solar panel. Additionally, the control button 528 is also included in the external hardware 502, which may be used by the user to transmit a signal to the task coordinator 524 to control the execution of the task, such as to initiate the task or reboot the task.

The microcontroller on-chip system 504 has a task scheduler 514 that schedules the execution of a task according to a timer. The task scheduler 514 includes an energy estimator 516. Upon timer expiration, the energy estimator 516 may calculate the voltage that may be provided by the solar panel for the capacitor based on the lumination of light 522 measured by the light sensor 526 to further determine the length of time for the next execution of the scheduled task. The energy estimator 516 can also obtain a capacitor voltage 520 of the capacitor. In addition, the energy estimator 516 also includes a collector feature 518 such as the size of the capacitive in-block, the recovery efficiency of the solar panel, etc. The task coordinator 524 in the task scheduler 514 may initiate or restart execution of a task based on the signal entered by the control button 530 and may also control scheduling of the task based on the size of the capacitor voltage and whether the timer expires. For example, when a task is a task of a machine learning model, the task coordinator may initiate a training task of the machine learning model according to a control button. After the training task is complete, the reasoning task of the machine learning model is then controlled based on the size of the capacitor voltage and timer.

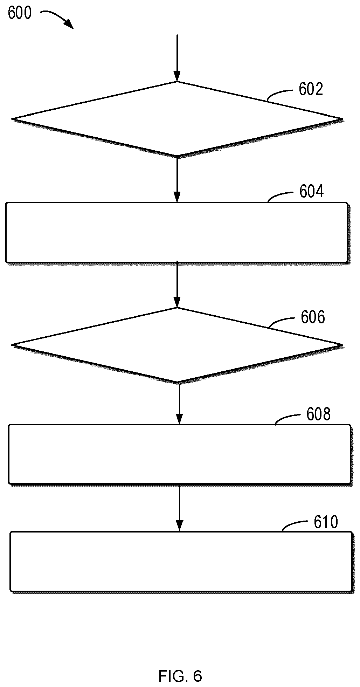

An embodiment of a specific design of a system structure consistent with examples of the present disclosure is described above in connection with FIG. 5. A flow chart of a method for processing a task, consistent with examples of the present disclosure, is described below in connection with FIG. 6. The method may be performed on the controller 104 or any suitable computing device

In the example 600 shown in FIG. 6, at block 602, the controller 104 determines if the timer for execution of the task expires. If the timer does not expire, the controller waits and does not perform the task. If the timer expires, at block 604, the controller 104 measures the voltage of the capacitor used to provide power for the execution of the task. In some examples, as shown in FIG. 4, the voltage of the resistance 404 can be obtained first through the contact 412 and then determined from the ratio of the resistance 402 to the resistance 404 to the voltage of the input contact 414 connected to the solar panel, thereby determining the voltage of the capacitor.

Next, at block 606, the controller determines if the voltage is within a predetermined range. If the voltage is within the predetermined range, at block 608, the controller 104 updates the timer with a target length determined based on the compensation voltage provided to the capacitor by the energy conversion component.

In some examples, the scheduling for execution of the task is on-demand scheduling, at which time the number of executions is determined based on the efficiency of the capacitor charging. Get more solar energy and charge the capacitor more quickly, which can increase the number of task dispatches. The number of task dispatches can be reduced if the acquisition of solar energy is low and the capacitor charging is slow. In an on-demand scheduling scenario, the light sensor may be used to measure the illumination when updating the timer with the target length. As shown in FIG. 5, a light sensor 526 is used to measure the illumination of the energy conversion component. The measured illumination is then transmitted to the controller. The controller may then determine a target length that may be used to update the timer based on the detected illumination, thereby determining a time for the next task to execute.

In some examples, when determining a target length based on illumination, the controller needs to determine the amount of voltage consumed per execution of the task, i.e., the controller will determine how much voltage the capacitor will lose as a result of performing the task at one time. Since the task being performed is fixed, the voltage it consumes per execution is also fixed. Thus, in compensating for the consumable voltage through the energy conversion component, the illumination may be utilized to determine the compensation length of the consumed voltage to be compensated. In addition, the controller may also determine the execution time of the out task. In an example, the task execution length is predetermined. In another example, the length of time that the previous task was executed is the length of time that the current task was executed. The controller then determines the target length based on the compensation length and the execution length. For example, the sum of the compensation length and the execution length as the target length determines how long it will take to perform the next task.

In some examples, execution of the task is evenly scheduled, at which time the timer is evenly spaced. This uniform spacing or timer length is determined based on lighting data collected during a previous work cycle of the machine for which the task is directed. For example, if the task is to detect a failure of the machine, the length timer used to dispatch the task in a subsequent work cycle may be determined based on the lighting data collected in one work cycle of the machine.

In this process, the controller 104 first acquires a set of illumination for the energy conversion component measured in a previous work cycle of the machine associated with the task. For example, a set of illumination measured by the light sensor is collected in a previous work cycle by the light sensor and recorded in a memory device. The controller then utilizes the set of illumination to determine the total voltage that may be obtained during a target work cycle of the machine. In some examples, a pre-trained machine learning model is used to calculate the total voltage available from the solar panel in a target work cycle using a set of illumination from the previous work cycle. In some examples, a mathematical function may be utilized to calculate the total voltage available from the solar panel in the target work cycle from a set of illumination. In addition, the controller may also acquire a consumable voltage per execution of the task. For example, the voltage consumed per execution of the task is known. Accordingly, the controller may determine the number of executions of the task based on the total voltage and the consumable voltage. For example, using the total voltage other than the consumed voltage may determine how many times the total voltage provided by the solar panel may be used. The controller may then use the length of the target work cycle and the number of executions to calculate the time interval in which the task is performed in the target work cycle. For example, the length of the target work cycle divided by the number of executions to determine the length of each execution interval. This interval is then utilized to update the timer.

In some examples, the compensation voltage provided to the capacitor by the energy conversion component is provided by wind or water, the target length of which may be determined based on the length of time that the wind or water provides the compensation voltage. The above examples are intended only to describe the present disclosure and are not a specific limitation of the present disclosure.

At block 610, the controller 104 utilizes the voltage of the capacitor to perform the task. When the voltage is within the predetermined range, it is indicated that the voltage provided by the capacitor can be performed on the task, at which point the voltage of the capacitor is utilized to perform a task.

In some examples, if the voltage is outside a predetermined range, the voltage provided by the battery may be utilized to perform the task in a scenario that is scheduled on demand and in a uniform scheduling scenario of the task. At this point, the controller obtains a predetermined length of time and then uses the predetermined length of time to update the timer.

In some examples, the tasks that the controller schedules and executes are reasoning tasks for the machine learning model. The controller may also load the reasoning task, such as the data required to perform the reasoning task, before the reasoning task is performed. Additionally, training tasks for the machine learning model may also be performed on the controller.

By this method, the voltage to the capacitor may be provided by the energy conversion component, which avoids the addition of additional power cable arrangement in the detection environment, and the periodicity of task scheduling execution is determined according to the voltage of the capacitor, so that the reliable execution of the task is achieved by self-power, improving the user experience.

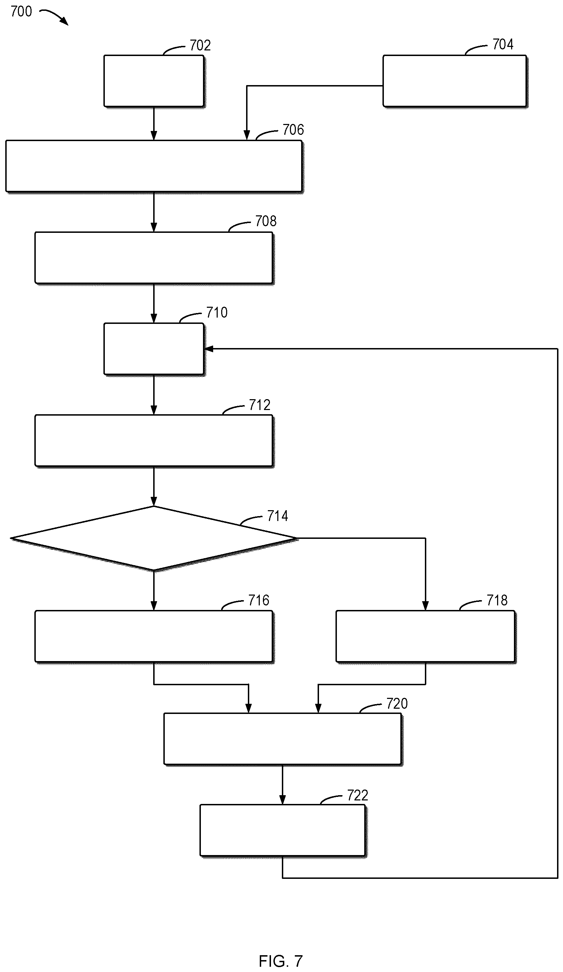

A flow chart of a method for processing a task, consistent with examples of the present disclosure, is described above in connection with FIG. 6. A schematic diagram of an embodiment process for processing a task, consistent with examples of the present disclosure, is described below in connection with FIG. 7.

As shown in FIG. 7, the example process 700 is an example process for on-demand scheduling of reasoning tasks for a machine learning model. This example process begins at block 702. An external event for training or retraining the machine learning model is then received at block 704. The machine learning model is trained or retrained, for example, by triggering the control button 528 in FIG. 5. At block 706, training of the machine learning model begins. For example, the controller trains a machine learning model for fault detection of the machine. Upon completion of the training task, at block 708, load the machine learning model's reasoning task.

At block 710, the controller is in an idle phase. The controller has a timer within it and when the timer has not expired, the controller remains idle and does not perform the reasoning task of the machine learning model. Upon expiration of the timer, at block 712, the voltage used to supply the controller the capacitor of power is measured and the controller acquires the voltage to the capacitor. The voltage of the capacitor is then determined to be within operating range at block 714. If the voltage of the capacitor is within the operating range, then at block 716, the controller uses the illumination obtained from the light sensor to estimate the energy budget.

In estimating the energy budget, the mechanism for on-demand scheduling is to achieve the energy budget by predicting energy inputs to balance energy input and energy consumption in real time and by controlling the task execution cycle to obtain energy inputs. The mechanism is adaptive and attempts to achieve optimal performance by scheduling as many tasks as possible under an energy budget without compromising the sustainability of the system. The voltage at the moment t on the capacitor during the capacitor charging process is represented by equation (1) below:

$$U_c(t) = U_c(0) + (U_R - U_c(0)) \times (1 - e^{\frac{-t}{\tau}}) \quad (1)$$

where $U_c(0)$ represents the initial capacitor voltage, = is the time constant, wherein is the internal resistance, and is the capacitor. Further, the $U$ represents a capacitor charging voltage corresponding to an open circuit voltage of the solar panel. Under the appropriate conditions, $U$ may be considered a linear transform of the measured lumination, expressed as $U = \alpha \times + b$, where a, b are constants.

Based on *the $U_c \sim t$* relationship, given the current capacitor voltage is $U_c(t_0)$, the voltage increment at the time point after the time interval $\delta U_c(\delta t)$ is calculated by equation (2) below:

$$\delta U_c(\delta t) = (U_R - U_c(t_0)) \times (1 - e^{\frac{-\delta t}{\tau}}) \quad (2)$$

Thus, considering that performing a single task requires $\Delta t_{exe}$ seconds and results in a voltage drop of $\Delta U$, the time required to replenish the energy consumed is calculated by equation (3) below:

$$\Delta t_{charge} = -\tau \times \ln(1 - \Delta U/(\tilde{\alpha}\eta + \tilde{b})) \quad (3)$$

where $\tilde{\alpha} + \tilde{b}$ represents an approximation of $U - U_c(t_0)$. When scheduling is performed on demand, the energy budget is $\Delta t_{exe} + \Delta t_{charge}$, which can be set to a cycle timer period.

If the voltage of the capacitor is not within operating range, calculate the energy budget from the battery charge at block 720. When charging the battery, the energy budget is set for a predetermined length of time. The cycle timer is then updated based on the energy budget at block 720. Then, at block 722, begin the reasoning task of the machine learning model. The next reasoning task of the machine learning model is then performed after the updated cycle timer expires.

By this method, the voltage to the capacitor may be provided by the energy conversion component, which avoids the addition of additional power cable arrangement in the detection environment, and the periodicity of task scheduling execution is determined according to the voltage of the capacitor, so that the reliable execution of the task is achieved by self-power, improving the user experience.

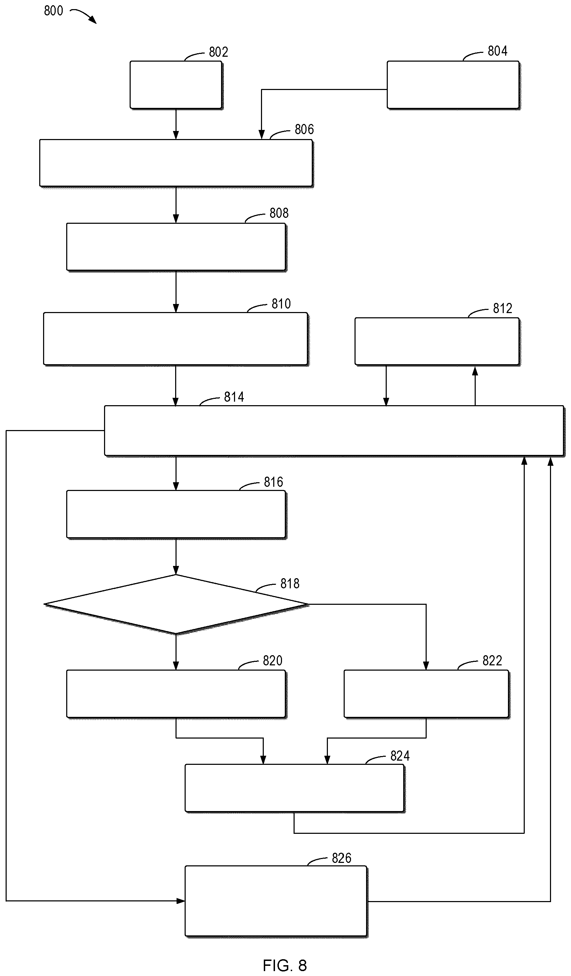

A diagram of an example process for processing a task, in connection with FIG. 7, is described above. A schematic diagram of another embodiment process for processing a task, consistent with examples of the present disclosure, is described below in connection with FIG. 8.

As shown in FIG. 8, the example process 800 is an example process for periodically scheduling reasoning tasks for a machine learning model. This example process begins at block 802. An external event for training or retraining the machine learning model is then received at block 804. The machine learning model is trained or retrained, for example, by triggering the control button 528 in FIG. 5. At block 806, training of the machine learning model begins. A machine learning model for fault detection of a machine, for example. Upon completion of the training task, at block 808, the controller loads the reasoning task, such as the acquired data for fault detection, etc.

At block 810, the controller loads an energy budget learning task. In addition, the controller records a set of illumination or luminance for a working period of the machine collected by the light sensor at block 812. Additionally, the set of illumination or luminance are acquired within a timing period of the data recording timer. The energy budget learning task may then be performed using a recorded set of illumination or luminance, and the reasoning task cycle timer updated with the calculated energy budget.

For example, the machine operates for a 24-hour work cycle. If the sequence of the illumination measured in one work cycle is ($t$), the energy collected in the next work cycle may be predicted by equation (4) below:

$$\delta U_c(\delta t) = (\tilde{\alpha}\tilde{\eta} + \tilde{b}) \times (1 - e^{\frac{-\delta t}{\tau}})^{(4)}$$

wherein $\bar{\eta}$ represents the moving average of the illumination measured in one work cycle. Thus, energy in a work cycle can be calculated by equation (4) above. The number of times a task can be performed in a work cycle can then be determined based on the energy collected in the previous work cycle and the voltage consumed per execution. The time interval for execution of each task can then be determined by dividing the length of a work cycle by the number of times the task was executed. The time interval is then updated as an energy budget for the task cycle timer.

The controller remains idle at block 814 until the task cycle timer expires. Upon expiration of the task cycle timer, at block 816, the voltage used to supply the controller with the capacitor is measured. The voltage of the capacitor is then determined to be within operating range at block 818. If the voltage of the capacitor is within the operating range, then at block 820, the task cycle timer is updated with an energy budget calculated over the entire environmental cycle. For example, the task cycle timer is updated using the previously calculated interval of time. If the voltage of the capacitor is not within operating range, then at block 822, the task cycle timer is updated based on the energy budget from the battery. For example, the energy budget for the battery is set to a predetermined length of time. Then, at block 824, the reasoning task of the machine learning model begins. Next, wait for the updated cycle timer to expire and perform the next machine learning model reasoning task. In addition, an energy computing timer is also set up in example 800, which can be set to a period of time, and then at block 826 after the energy computing timer expires, re-calculate with the energy budget learning task and update the task cycle timer to the re-calculated length of time.

By this method, the voltage to the capacitor may be provided by the energy conversion component, which avoids the addition of additional power cable arrangement in the detection environment, and the periodicity of task scheduling execution is determined according to the voltage of the capacitor, so that the reliable execution of the task is achieved by self-power, improving the user experience.

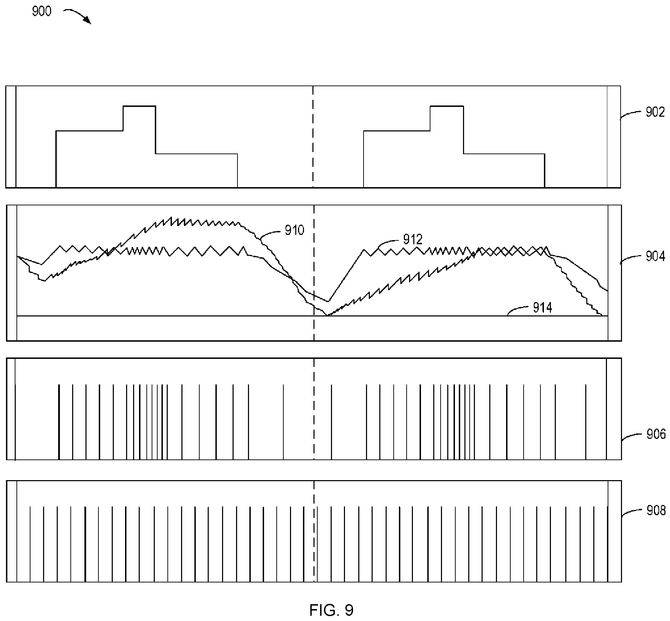

A diagram of another embodiment process for processing a task is described above in connection with FIG. 8 in accordance with examples of the present disclosure. A schematic diagram of an embodiment of on-demand scheduling and periodic scheduling, consistent with examples of the present disclosure, is described below in connection with FIG. 9.

In the example 900 shown in Figure 9, box 902 shows the change in illumination over two work cycles. Block 904 shows a corresponding change in system voltage or capacitor voltage, with a curve 912 corresponding to a change in system voltage or capacitor voltage when scheduled on demand, and a curve 910 corresponding to a change in system voltage or capacitor voltage when scheduled on a uniform basis. The straight line 914 corresponds to battery voltage. In addition, block 906 corresponds to the number of executions of tasks while being scheduled on demand and the corresponding time interval, and block 908 corresponds to the number of executions of tasks while being scheduled evenly and the time interval being even.

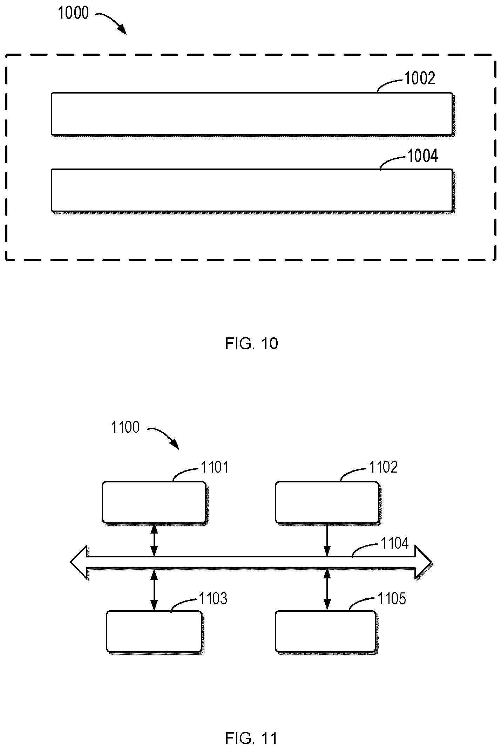

FIG. 10 further illustrates a schematic diagram of a device for processing tasks according to an example of the present disclosure. The device 1000 can be applied to a controller 104, which may include a plurality of modules for performing the corresponding steps in the method 600 discussed in FIG. 6. As shown in Figure 10, the device 1000 comprises: The voltage measurement unit 1002 configured to measure a voltage of a capacitor used to provide power for the execution of a task in response to a timer expiration for execution of the task, a timer update and a task execution unit 1004 configured to update the timer with a target length of time in response to the voltage being within a predetermined range, where the target length is determined based on a compensation voltage provided to the capacitor by the energy conversion component, and a voltage with the capacitor is used for task execution.

In some examples, wherein the timer update and task execution unit 1004 comprises: a illumination acquisition unit configured to acquire a lumination of the energy conversion component measured by a light sensor, and a first target length determination unit configured to determine a target length based on the illumination.

In some examples, the target length determination unit further includes: a consumable voltage determination unit configured to determine a consumable voltage for execution of a task, a compensation length determination unit configured to determine a compensation length for capacitor to compensate the consumed voltage by an energy conversion component based on illumination, an execution length determination unit configured to determine a task execution length, and a second target length determination unit configured to determine a target length based on a compensation length and an execution length.

In some examples, the device 1000 further comprises: a set of illumination acquisition units configured to obtain a set of illumination for energy conversion components measured in a previous work cycle of a task associated machine, a total voltage determination unit configured to determine a total voltage available in a target work cycle of the machine based on a set of illumination, an execution number determined unit configured to determine a number of executions of a task based on a total voltage and a consumption voltage per execution for a task, a third target length determination unit configured to determine a target length, and a second timer update unit configured to update the timer based on a target length.

In some examples, wherein the third target length determination unit comprises: a time interval determining unit determining a time interval for performing a task in a target work cycle based on a time period of a target work cycle and a number of times of execution, and a fourth target length determination unit configured to determine the time interval as the target length.

In some examples, the device 1000 further comprises: a data collection unit configured to collect a set of illumination measured by a light sensor in a previous work cycle, and a recording unit configured to record a set of illumination.

In some examples, the device 1000 further comprises: a task execution unit configured to perform a task with a voltage provided by a battery in response to the voltage being outside the predetermined range.

In some examples, the device 1000 further comprises: a predetermined length determination unit configured to determine a predetermined length associated with a battery; and a second timer update unit configured to update the timer with the predetermined length.

In some examples, wherein the task is a reasoning task of the machine learning model or a training task of the machine learning model, the device 1100 further comprises: a task loading unit configured to load a reasoning task of a machine learning model or the training task of the machine learning model.

FIG. 11 shows a schematic block diagram of an exemplary device 1100 that may be used to implement an example of the present disclosure. The controller 104 of the FIG. 1 may be implemented with the device 1100. As shown in the figure, the device 1100 includes a processor 1101, which can perform various appropriate actions and processes according to computer program instructions stored in a read-only memory (ROM) 1102 and loaded into a random-access memory (RAM) 1103. Various programs and data required for device 1100 operations may be stored in the RAM 1103. The processors 1101, ROM 1102, and RAM 1103 are connected to each other via a bus 1104. An input/output (I/O) interface 1105 is also connected to the bus 1104.

The various processes and processing described above, such as the method 600 and the processes 700 and 800, may be executed by the processor 1101. For example, in some examples, the method 600 and the processes 700 and 800 may be implemented as a computer software program that is tangibly contained in a machine-readable medium. In some examples, a computer program, whether in part or in full, may be loaded and/or installed onto the device 1100 via the ROM 1102. When the computer program is loaded onto the RAM 1103 and executed by the processor 1101, one or more actions of the method 600 and processes 700 and 800 described above may be performed.

The present disclosure may be a method, apparatus, system and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: portable computer disk, hard disk, RAM, ROM, erasable programmable read-only memory (EPROM or flash), static random access memory (SRAM), portable compact disc read-only memory (CD-ROM), digital versatile disc (DVD), memory stick, floppy disk, mechanical encoder, such as punched card stored with instructions or a structure with a protrusion in a groove, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, an apparatus that realizes the functions/actions stipulated in one or more boxes in the flow charts and/or block diagrams is produced. These computer-readable program instructions may also be stored in computer-readable storage medium, enabling computers, programmable data processing devices, and/or other devices to operate in a specific manner. Therefore, the computer-readable media containing instructions comprise a manufactured product that includes instructions for implementing various aspects of the functions/actions specified in one or more boxes in the flow charts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples, the technological improvements in the technology in the market, or allow others of ordinary skill in the art to understand the various examples disclosed in this text.

**Claims**

1. A method for processing a task, comprising:

    measuring a voltage of a capacitor used to provide power for the execution of a task in response to a timer expiration for execution of the task,
in response to the voltage being within a predetermined range,

updating the timer with a target length, wherein the target length is determined based on a compensation voltage provided to the capacitor by an energy conversion component, and
utilizing a voltage of the capacitor to perform the task.

2. The method of Claim 1, wherein updating the timer with a target length of time comprises:

obtaining an illumination of the energy conversion component measured by a light sensor, and
determining the target length based on the illumination.

3. The method of Claim 2, wherein determining, based on the illumination, the target length comprises:

determining a consumable voltage for execution of the task,
determining, based on the illumination, a compensation length of time for which the consumable voltage is compensated by the energy conversion component for the capacitor,
determining a time period for execution of the task, and
determining the target length based on the compensation length and the execution length.

4. The method according to Claim 1, further including:

obtaining a set of illuminations for the energy conversion component measured in a previous work cycle of a machine associated with the task,
determining a total voltage that may be obtained in a target work cycle of the machine based on the set of illuminations,
determining a number of times of execution of the task based on the total voltage and a consumable voltage per execution for the task,
determining the target length based on the number of executions, and
updating the timer with the target length.

5. The method of Claim 4, wherein determining the target length based on the number of executions comprises:

determining a time interval for performing the task in the target work cycle based on the length of the target work cycle and the number of times of execution, and
determining the time interval as the target length.

6. The method according to Claim 4, further including:

collecting the set of illuminations measured by a light sensor in the previous work cycle, and
recording the set of illuminations.

7. The method according to Claim 1, further including:
performing the task with a voltage provided by a battery in response to the voltage being outside the predetermined range.

8. The method according to Claim 7, further including:

determining a predetermined length of time associated with the battery, and
updating the timer with the predetermined length of time.

9. The method of Claim 1, wherein the task is a reasoning task of a machine learning model or a training task of the machine learning model, the method further comprising:
loading the reasoning task of the machine learning model or the training task of the machine learning model.

10. A device for processing a task, comprising:

a voltage measurement unit configured to measure a voltage of a capacitor used to provide power for the execution of a task in response to a timer expiration for execution of the task,
a timer update and task execution unit configured to operate in response to the voltage being within a predetermined range,

updating the timer with a target length, wherein the target length is determined based on a compensation voltage provided to the capacitor by an energy conversion component, and
utilizing a voltage of the capacitor to perform the task.

11. A controller, comprising:

at least one processor, and
a memory, coupled to the at least one processor, and having instructions stored thereon that, when executed by the at least one processor, cause the controller to perform the method according to any one of Claims 1-9.

12. An energy-based adaptive dispatching device, comprising:

an energy conversion component,
a capacitor, and
The controller of Claim 11.

13. The adaptive dispatching apparatus of Claim 12, wherein the energy conversion component comprises: Solar panels.

14. A computer-readable storage medium having computer-executable instructions stored thereon, wherein the computer-executable instructions are executed by a processor to implement the method according to any one of Claims 1 to 9.

FIG. 1

FIG. 2

300

FIG. 3

400

FIG. 4

FIG. 5

600

602

604

606

608

610

FIG. 6

700

702

704

706

708

710

712

714

716

718

720

722

FIG. 7

FIG. 8

FIG. 9

1000

1002

1004

FIG. 10

1100

1101

1102

1104

1103

1105

FIG. 11

Europäisches
Patentamt

European
Patent Office

Office européen
des brevets

# EUROPEAN SEARCH REPORT

Application Number

EP 25 15 4004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/257529 A1 (WILKERSON CHRISTOPHER [US] ET AL) 7 October 2010 (2010-10-07) * figures 1,2,5,6 * * paragraph [0009] - paragraph [0023] * ----- | 1-14 | INV. G06F1/329 H02J7/34 H02J7/35 |
| X | US 2019/018472 A1 (ELBOIM YARON [IL] ET AL) 17 January 2019 (2019-01-17) * figure 3 * * paragraph [0002] - paragraph [0056] * ----- | 1-14 | |
| X | DELGADO CARMEN ET AL: "Optimal Energy-Aware Task Scheduling for Batteryless IoT Devices", IEEE TRANSACTIONS ON EMERGING TOPICS IN COMPUTING, IEEE, vol. 10, no. 3, 2 June 2021 (2021-06-02), pages 1374-1387, XP011918911, DOI: 10.1109/TETC.2021.3086144 [retrieved on 2021-06-03] * the whole document * ----- | 1-14 | |

TECHNICAL FIELDS
SEARCHED (IPC)

G06F
H02J

The present search report has been drawn up for all claims

| Place of search | Date of completion of the search | Examiner |
|---|---|---|
| The Hague | 16 June 2025 | De Poy, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4004

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2025

| Patent document cited in search report | Publication date | Patent family member(s) | | Publication date |
|---|---|---|---|---|
| US 2010257529 A1 | 07-10-2010 | CN | 101872996 A | 27-10-2010 |
| | | DE | 102010013961 A1 | 16-12-2010 |
| | | GB | 2469380 A | 13-10-2010 |
| | | JP | 5285015 B2 | 11-09-2013 |
| | | JP | 2010259320 A | 11-11-2010 |
| | | KR | 20100111254 A | 14-10-2010 |
| | | TW | 201115316 A | 01-05-2011 |
| | | US | 2010257529 A1 | 07-10-2010 |
| US 2019018472 A1 | 17-01-2019 | CN | 110945457 A | 31-03-2020 |
| | | EP | 3610354 A1 | 19-02-2020 |
| | | US | 2019018472 A1 | 17-01-2019 |
| | | US | 2020401203 A1 | 24-12-2020 |
| | | WO | 2019014321 A1 | 17-01-2019 |

EPO FORM P0459

For more details about this annex : see Official Journal of the European Patent Office, No. 12/82